# EUROPEAN PATENT APPLICATION

(11) **EP 1 898 633 A1**
(43) Date of publication of application: **12.03.2008**
(21) Application number: 07016938.8
(22) Date of filing: 29.08.2007
(51) Int. Cl.: H04N 5/232, G02B 7/28, G02B 7/36, G02B 27/10, G02B 27/14, G03B 3/00, G03B 13/00, G03B 13/36

(54) **Camera having focusing condition detection function**

(30) Priority: 05.09.2006 JP 2006239807
(71) Applicant: Fujinon Corporation, Saitama-shi, Saitama (JP)
(72) Inventor: Toyama, Nobuaki, Saitama (JP)
(74) Representative: Klunker . Schmitt-Nilson . Hirsch

(57) **Abstract**

At least one lens element of an imaging lens is arranged on a rear side of a half mirror 10. Also, at least one of the lens element on the rear side or all constituent elements including an imaging element 33 on the rear side of the half mirror 10 are arranged in a decentering state with respect to an optical axis Zl of lens elements on a front side of the half mirror 10. Even if offset of the optical axis is caused by arrangement of the half mirror 10, such offset can be corrected on the camera-main-body side. Thereby, good imaging performances can be achieved even if the half mirror 10 is used as a light splitting means.

## Description

### BACKGROUND OF THE INVENTION

### 1. Technical Field

The invention relates to a camera having a focusing condition detection function that is used in autofocus control of an imaging lens, for example.

### 2. Description of the Related Art

It is common that an autofocus system in a home video camera is constructed on a contrast basis. In this contrast system, a focus estimation value is calculated by integrating high frequency components of video signals (luminance signals) obtained from an imaging device over a certain range (focus area), and then focusing is performed automatically so that the focus estimation value is maximized. Thereby, the best focus (focusing) at which sharpness (contrast) of an image captured by the imaging device is maximized is obtained.

However, because this contrast system is a so-called mountain-climbing system for searching for the best focus while moving the focus lens, this system has such a drawback that a response speed to the focusing is slow. In order to overcome such drawback of the contrast system, JP 2002-365517 A (corresponding to U.S. Patent No.6,822,801) has proposed a method of detecting a focusing condition of the imaging lens by using a plurality of imaging devices arranged in positions that have different optical path lengths. According to this detection method, focusing-condition-detection imaging elements are arranged in three positions, i.e., a conjugate position to a normal imaging element and front and rear positions which are equally distant from the conjugate position respectively. The focus estimation value is calculated from the video signals obtained from the respective focusing-condition-detection imaging elements. Then, the focusing condition on an image plane of the normal imaging element is detected by comparing respective magnitudes of the focus estimation values. Also, the focusing condition can be detected if the focusing-condition-detection imaging elements are arranged only in two positions, i.e., the front and rear positions which are equally distant from the conjugate position, without the focusing-condition-detection imaging element being arranged in the conjugate position. According to the method of detecting the focusing condition of the imaging lens by using the plurality of imaging elements, it can be determined not only whether or not the focusing condition is obtained but also which one of the front side and the rear side of the focused position the focusing condition is located on. As a result, such a method has an advantage that the response speed to the focusing is quick.

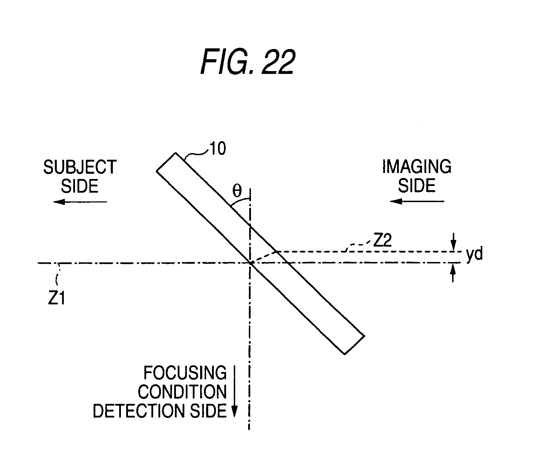

Meanwhile, there is a broadcasting camera zoom lens containing a relay lens system in its inside so that an extender optical system can be inserted thereinto. In JP 2002-65517 A, such a system has been proposed that a subject light is split by the half mirror arranged in the relay lens system in the imaging lens as a light splitting means. One light transmitted through the half mirror is set as imaging subject light while the other light reflected from the half mirror is guided to the focusing-condition-detection imaging element as a focusing-condition-detection subject light. An example of the arrangement of the half mirror is shown in Fig.22. A half mirror 10 is arranged on an optical axis Z1 of an imaging lens (not shown) at an inclination angle θ = 45 degrees, for example.

### SUMMARY OF THE INVENTION

However, in the case of the system that splits the subject light by the half mirror 10, an optical axis Z2 on the rear side of the half mirror 10 is shifted from an optical axis Z1 of the imaging lens by Yd as shown in Fig. 22. Hence, an aberration due to the offset Yd is caused on the imaging side (camera-main-body side).

The invention has been made in view of the above circumstances and provides a camera having a focusing condition detection function that is capable of giving good imaging performances even if a half mirror is used as a light splitting means.

According to an aspect of the invention, a camera having a focusing condition detection function includes an imaging lens, a half mirror, a camera main body and a focusing condition detection device. The imaging lens includes a plurality of lenses. The half mirror is arranged on an optical path of the imaging lens to split subject light passing through the imaging lens into transmitted light and reflected light. The transmitted light is set as imaging subject light. The reflected light is set as focusing-condition-detection subject light. The camera main body includes an imaging element on which the imaging subject light is incident. The focusing condition detection device includes a focusing-condition-detection imaging element on which the focusing-condition-detection subject light is incident. The focusing condition detection device detects a focusing condition of the imaging lens based on an image captured by the focusing-condition-detection imaging element. At least one lens element of the imaging lens is arranged on a rear side of the half mirror. At least one of the lens element on the rear side or all constituent elements including the imaging device on the rear side of the half mirror are arranged in a decentering state with respect to an optical axis of lens elements on a front side of the half mirror.

This camera is configured so that at least one of the lens element on the rear side or all constituent elements including the imaging device on the rear side of the half mirror are arranged in a decentering state with respect to an optical axis of lens elements on a front side of the half mirror. Thereby, even if offset of the optical axis is caused due to the arrangement of the half mirror, such offset can be corrected on the imaging side (the camera-main-body side). As a result, the good imaging performance can be achieved even if the half mirror is used.

Also, the at least one of the lens element on the rear side or all the constituent elements on the rear side of the half mirror may be arranged so as to be decentered in a direction corresponding to an offset of the optical axis caused by the half mirror.

Thereby, the offset of the optical axis can be corrected surely.

Also, the camera main body may include a camera-main-body-side optical system and a plurality of imaging elements. The camera-main-body-side optical system includes a color separation optical system that separates the imaging subject light into a plurality of color lights. The plurality of color lights into which the imaging subject light is separated are incident on the plurality of imaging elements, respectively. The at least one lens element on the rear side of the imaging lens, the camera-main-body-side optical system, and all the constituent elements including the plurality of imaging elements on the rear side of the half mirror may be arranged in a decentering state.

Thereby, the offset of the optical axis can be corrected even if the color separation optical systems are provided.

Also, the imaging lens may include a relay optical system including a plurality of lenses. The half mirror may be arranged in the relay optical system.

Also, the focusing condition detection device may have a function of performing autofocus control of the imaging lens based on the detected focusing condition.

According to the camera having the focusing condition detection function, the at least one lens element of the imaging lens is arranged on the rear side of the half mirror, and the at least one of the lens element on the rear side or all the constituent elements including the imaging element on the rear side of the half mirror are arranged in the decentering state with respect to the optical axis of lens elements on the front side of the half mirror. Therefore, even if the offset of the optical axis is caused due to the arrangement of the half mirror, such offset can be corrected on the camera-main-body side. As a result, the good imaging performance can be achieved even if the half mirror is used as the light splitting means.

### BRIEF DESCRIPTION OF THE DRAWINGS

Fig.1 is configurative diagrams of main portions showing a decentering state in a camera according to an embodiment of the invention.
Fig.2 is a general configurative diagram showing an example of the system configuration of the camera according to the embodiment of the invention.
Fig.3 is a configurative diagram showing an example of a camera-main-body-side optical system in the camera according to the embodiment of the invention.
Fig.4 is an explanatory view equivalently showing a positional relationship between an imaging element for imaging and an imaging element for focusing condition detection on the same optical axis.
Fig.5 is a block diagram showing the configuration of a signal processing section in a focusing condition detection device.
Fig.6 is an explanatory view showing the focusing condition detecting principle in the focusing condition detection device.
Fig.7 is a section view of an optical system showing a first configurative example (Example 1) of an imaging lens in the camera according to the embodiment of the invention.
Fig.8 is a table showing lens data of the imaging lens according to Example 1.
Fig.9 is an aberration chart showing various aberrations of the imaging lens according to Example 1 at a wide-angle end, wherein (A) shows a spherical aberration, (B) shows an astigmatism, and (C) shows a distortion.
Fig. 10 is an aberration chart showing various aberrations of the imaging lens according to Example 1 at a telephoto end, wherein (A) shows a spherical aberration, (B) shows an astigmatism, and (C) shows a distortion.
Fig.11 is an aberration chart showing a transverse aberration in the imaging lens according to Example 1 when an inclination of a half mirror is 0 degree.
Fig.12 is an aberration chart showing a transverse aberration in the imaging lens according to Example 1 when an inclination of a half mirror is 45 degrees and no optical axis correction is applied.
Fig.13 is an aberration chart showing a transverse aberration in the imaging lens according to Example 1 when an inclination of a half mirror is 45 degrees and an optical axis correction is applied only to a lens group on the rear side of the half mirror.
Fig.14 is a section view of an optical system showing a second configurative example (Example 2) of an imaging lens in the camera according to the embodiment of the invention.
Fig.15 is a table showing lens data of the imaging lens according to Example 2.
Fig. 16 is an aberration chart showing various aberrations of the imaging lens according to Example 2 at a wide-angle end, wherein (A) shows a spherical aberration, (B) shows an astigmatism, and (C) shows a distortion.
Fig. 17 is an aberration chart showing various aberrations of the imaging lens according to Example 2 at a telephoto end, wherein (A) shows a spherical aberration, (B) shows an astigmatism, and (C) shows a distortion.
Fig.18 is an aberration chart showing a transverse aberration in the imaging lens according to Example 2 when an inclination of a half mirror is 0 degree.
Fig.19 is an aberration chart showing a transverse aberration in the imaging lens according to Example 2 when an inclination of a half mirror is 45 degrees and no optical axis correction is applied.
Fig.20 is an aberration chart showing a transverse aberration in the imaging lens according to Example 2 when an inclination of a half mirror is 45 degrees and an optical axis correction is applied to all lenses on the rear side of the half mirror.
Fig.21 is an aberration chart showing a transverse aberration in the imaging lens according to Example 2 when an inclination of a half mirror is 45 degrees and an optical axis correction is applied only to a lens group on the rear side of the half mirror.
Fig.22 is an explanatory view showing an offset of an optical axis caused by the half mirror.

### DETAILED DESCRIPTION OF EMBODIMENTS OF THE INVENTION

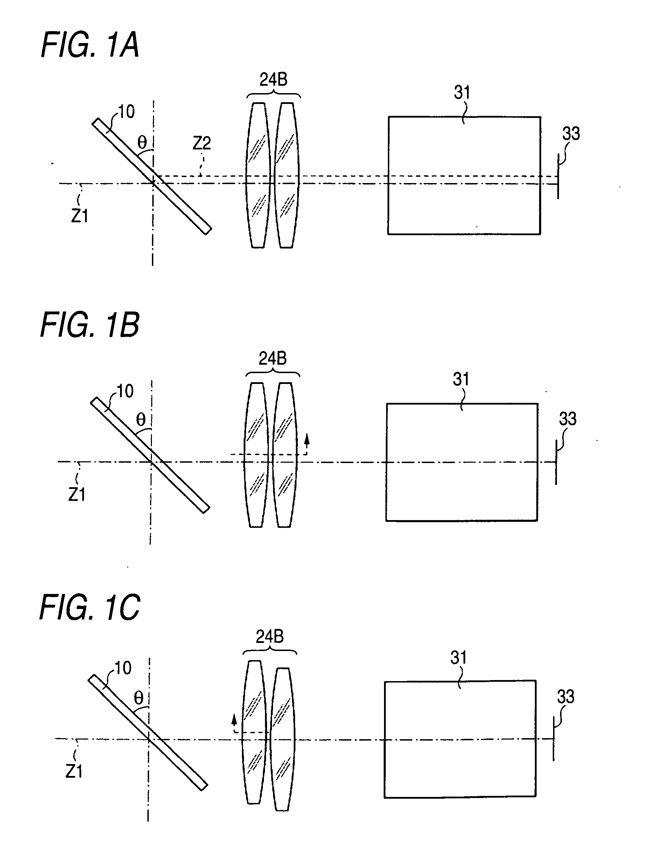

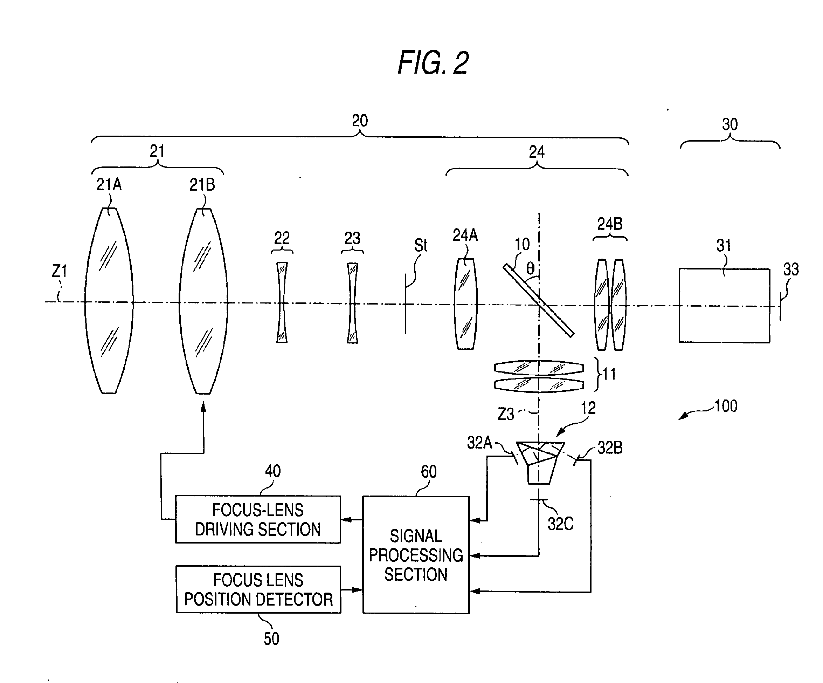

Embodiments of the invention will be explained in detail with reference to the drawings hereinafter. Fig.2 shows an example of the system configuration of a camera according to an embodiment of the invention. Fig.1(A), Fig.1(B), and Fig.1(C) show main portions of this system. For example, this system is used as a TV camera system. This camera system has an imaging lens 20 and a half mirror 10 arranged on an optical path of this imaging lens 20. The half mirror 10 splits subject light passing through the imaging lens 20 into a transmitted light and a reflected light. The transmitted light is used as imaging subject light. The reflected light is used as focusing-condition-detection subject light. Also, this camera system has a camera main body 30 on which the imaging subject light transmitted through the half mirror 10 is incident, and a focusing condition detection device 100 that detects a focusing condition of the imaging lens 20 based on the focusing-condition-detection subject light reflected from the half mirror 10. A lens-side mount is provided in a rear end portion of the imaging lens 20. The imaging lens 20 is fitted to the camera main body 30 by fitting the lens-side mount onto a camera-side mount provided in a top end surface of the camera main body 30.

The camera main body 30 has an imaging element 33, and a camera-main-body-side optical system 31 provided closer to the object side than the imaging element 33. This camera-main-body-side optical system 31 includes a color separation optical system. The color separation optical system separates the imaging subject light incident on the camera main body 30 into three colors of red light, green light and blue light, for example. In this case, the imaging element 33 is provided for each color. Here, in Fig.2, the camera-main-body-side optical system 31 is illustrated in a simplified manner by equivalently developing it on the optical axis Z1 of the imaging lens 20, and only one imaging element 33 is illustrated.

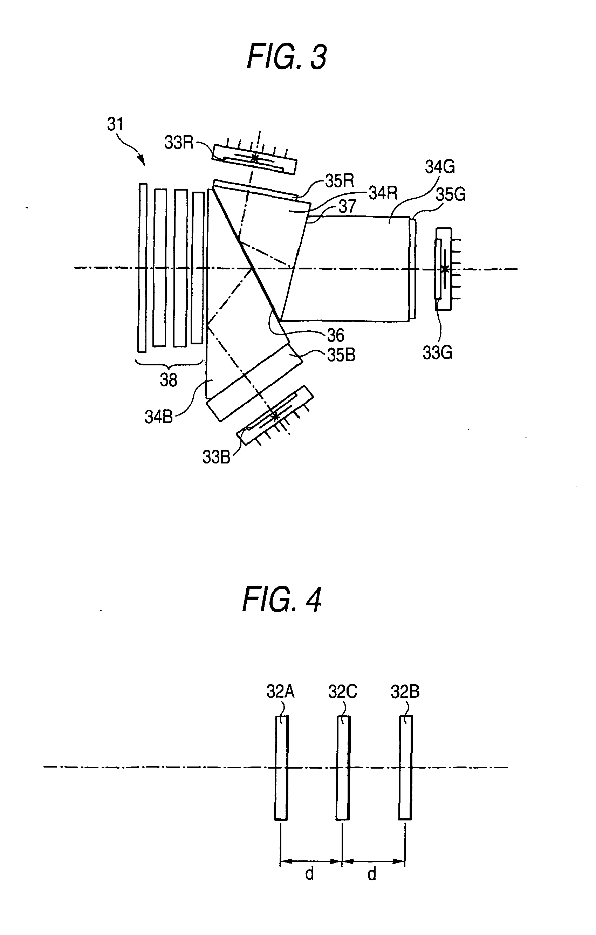

Fig.3 shows a configurative example of the camera-main-body-side optical system 31. The camera-main-body-side optical system 31 has color separation prisms 34R, 34G, 34B serving as a color separation optical system, trimming filters 35R, 35G, 35B provided in output surfaces of the color separation prisms 34R, 34G, 34B, and various filters 38 provided on incident sides of the color separation prisms 34R, 34G, 34B. A blue reflecting dichroic film 36 for reflecting blue light is provided in the color separation prism 34B. A red reflecting dichroic film 37 for reflecting red light is provided in the color separation prism 34R. The imaging elements 33R, 33G, 33B for the respective colors are arranged on output sides of the color separation prisms 34R, 34G, 34B, respectively. The imaging subject light incident on the camera-main-body-side optical system 31 is incident on the color separation prism 34B via the various filters 38. The color separation prism 34B outputs the blue light reflected by the blue reflecting dichroic film 36, to the blue imaging element 33B. Out of the light transmitted through the blue reflecting dichroic film 36, the red light is reflected by the red reflecting dichroic film 37 of the color separation prism 34R and is incident on the red imaging element 33R. The green light which is the light transmitted through the red reflecting dichroic film 37 is incident on the color separation prism 34G. The color separation prism 34G outputs the green light to the green imaging element 33G.

The imaging lens 20 is formed of a zoom lens, for example. The imaging lens 20 includes a focusing group 21 for performing focusing, a power varying group 22 moved to vary a power, a correcting group 23 for correcting change of an image plane due to the power variation, an aperture diaphragm St, and a relay optical system 24 in this order from the object side along the optical axis Z1, for example. The focusing group 21 has a fixed group 21A which is fixed during the focusing, and a moving group 21B which is moved during the focusing. The relay optical system 24 has a front relay lens group 24A and a rear relay lens group 24B. The rear relay lens group 24B has one lens or two or more lenses. The half mirror 10 is arranged in the relay optical system 24 and between the front relay lens group 24A and the rear relay lens group 24B at an inclination angle θ = 45°, for example. Therefore, at least one lens is arranged on the rear side of the half mirror 10. As explained with reference to Fig.1(A), Fig.1(B), and Fig.1(C) hereinafter, this embodiment has a feature in the arrangement of constituent elements on the rear side of the half mirror 10, and the basic configuration of the imaging lens 20 is not particularly limited.

In this embodiment, at least one of the lens elements (the rear relay optical system 24B) on the rear side of the half mirror 10 in the imaging lens 20 or all constituent elements including the imaging element 33 on the rear side of the half mirror 10 are arranged in a decentering state with respect to the optical axis Z1 of the lens elements (the focusing group 21, the power varying group 22, the correcting group 23, and the front relay lens group 24A) on the front side of the half mirror 10. In Fig. 2, illustration of this decentering state is omitted, but specific examples of the decentering state are shown in Fig. 1(A), Fig.1(B), and Fig.1(C).

Fig.1(A) shows a first decentering state. In the mode shown in Fig. 1(A), overall constituent elements on the rear side of the half mirror 10, i.e., the rear relay lens group 24B, the camera-main-body-side optical system 31, and the imaging element 33 are arranged as a whole in a decentering state with respect to the optical axis Z1 on the front side of the imaging lens 20. In Fig.1(A), the optical axis on the rear side of the half mirror 10 is shown as an optical axis Z2. Fig.1(B) shows a second decentering state, wherein overall lens elements on the rear side of the half mirror 10 (the rear relay lens group 24B) are arranged in a decentering state with respect to the optical axis Z1 on the front side of the imaging lens 20. In the mode shown in Fig.1(B), the camera-main-body-side optical system 31 and the imaging element 33 are not decentered from the optical axis Z1 on the front side. Fig.1(C) shows a third decentering state, wherein only a part of the lens element on the rear side of the half mirror 10 (the rear relay lens group 24B) is decentered from the optical axis Z1 on the front side of the imaging lens 20. In the mode shown in Fig.1 (C), the lens element decentered is one lens or two or more lenses depending on the configuration of the imaging lens 20. Also, in these modes, a direction of the decentration is set to correspond to the offset of the optical axis (see Fig.22) caused by the half mirror 10. Also, in the mode in Fig.1(A), an amount of decentration is a value that corresponds to the offset Yd of the optical axis caused by the half mirror 10. In the modes in Fig.1(B) and Fig.1(C), an amount of decentration is optimized appropriately in accordance with the lens configuration of the imaging lens 20 so that an amount of aberration caused by inserting the half mirror 10 is reduced.

The focusing condition detection device 100 has a function of detecting a focusing condition of the imaging lens 20 to perform autofocus control of the imaging lens 20. The focusing condition detection device 100 has a focusing-condition-detection lens group 11 on which the focusing-condition-detection subject light reflected by the half mirror 10 is incident, a light splitting prism 12 provided on the output side of the focusing-condition- detection lens group 11 to split the focusing-condition-detection subject light into three mutually different directions, and focusing-condition-detection imaging elements 32A, 32B, 32C provided on three output sides of the light splitting prism 12. The focusing-condition- detection lens group 11 is arranged on an optical axis Z3 that is turned by the half mirror 10 at almost 90° from the optical axis Z1 on the front side of the imaging lens 20. Also, the focusing-condition- detection lens group 11 has the similar lens configuration to the lens element (the rear relay lens group 24B) on the rear side of the half mirror 10 in the imaging lens 20.

Fig.4 shows optical axes of the subject light incident on the focusing-condition-detection imaging elements 32A, 32B, 32C (optical axes of respective imaging devices), on the same straight line. As shown in Fig.4, an optical path length of the subject light incident on the first focusing-condition-detection imaging element 32A is set shorter than that of the subject light incident on the second focusing-condition-detection imaging element 32B by a distance 2d,. Also, an optical path length of the subject light incident on the third focusing-condition-detection imaging element 32C is set to have an intermediate length of 2d. Also, an image plane of the third focusing-condition-detection imaging element 32C is set to have a conjugate relationship to an image plane of the imaging element 33 on the camera main body 30 side. Therefore, the first and second focusing-condition-detection imaging elements 32A, 32B are arranged equivalently in front and rear positions which are equally distant from the image plane (focused plane) of the imaging element 33, respectively.

In this manner, the first and second focusing-condition-detection imaging elements 32A, 32B capture a subject image in the front and rear positions which are equally distant from the image plane (focused plane) of the imaging element 33, respectively. Also, the third focusing-condition-detection imaging element 32C captures the subject image in an equivalent position to the image plane (focused plane) of the imaging element 33. In this case, it is not necessary for the focusing-condition-detection imaging elements 32A, 32B, 32C to be able to capture a color image. In this embodiment, it is assumed that CCD (Charge Coupled Device), CMOS (Complementary Metal Oxide Semiconductor), etc. for capturing a monochromatic image is employed.

Also, the focusing condition detection device 100 has a focus-lens driving section 40, a focus lens position detector 50 and a signal processing section 60. The signal processing section 60 processes a focusing-condition detection image obtained by the focusing-condition-detection imaging elements 32A, 32B, 32C to realize the autofocus control function.

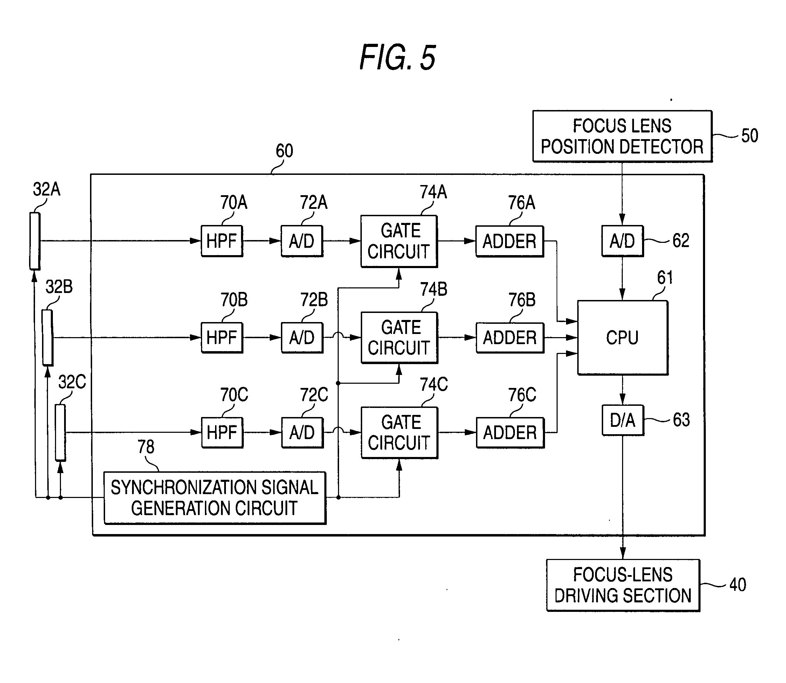

Fig.5 shows a concrete configurative example of the signal processing section 60. The imaging signals are input into the signal processing section 60 from the focusing-condition-detection imaging elements 32A, 32B, 32C. The signal processing section 60 detects a focusing condition of the imaging lens 20 based on the imaging signals acquired from the focusing-condition-detection imaging elements 32A, 32B, 32C, as described later. Also, the signal processing section 60 outputs a control signal to the focus-lens driving section 40 based on the detected focusing condition to control automatically the focusing of the imaging lens 20, as described later.

As shown in Fig.5, the signal processing section 60 has high-pass filters (HPFs) 70A, 70B, 70C, A/D (analog/digital) converters 72A, 72B, 72C, gate circuits 74A, 74B, 74C, and adders 76A, 76B, 76C, as a circuit that applies predetermined signal processes to the imaging signals acquired from the focusing-condition-detection imaging elements 32A, 32B, 32C. Also, the signal processing section 60 has a synchronization signal generation circuit 78 and CPU61. Also, the signal processing section 60 has an A/D converter 62 that analog/digital-converts a detection signal supplied from the focus lens position detector 50 to output a resultant signal to the CPU 61, and a D/A converter 63 that digital/analog converts the control signal, which is supplied from the CPU 61 to the focus-lens driving section 40.

The focus-lens driving section 40 has a focus motor for moving the focusing group 21 of the imaging lens 20, and a focus motor driving circuit for driving this focus motor.

Next, an operation and an effect of the camera system configured as above will be explained.

The subject light incident from the leading end of the imaging lens 20 is split into the imaging subject light and the focusing-condition-detection subject light by the half mirror 10 arranged in the imaging lens 20. The imaging subject light is incident on the camera main body 30. The imaging subj ect light incident on the camera main body 30 is separated into respective color components, that is, the red light, the green light, and the blue light by the color separation prisms 34R, 34G, 34B (Fig.3) in the camera-main-body-side optical system 31. Then, the subject light separated into the respective color components is incident on the image planes of the imaging devices 33R, 33G, 33B for the respective colors. The respective signals are converted into electric signals by the imaging devices 33R, 33G, 33B. The electric signals are processed by an image signal processing means (not shown). Then, the processed signals are output or recorded on a recording medium as a video signal in a predetermined format.

In this embodiment, the configuration on the rear side of the half mirror 10 is arranged in a adequately decentering state with respect to the optical axis Z1 on the front side in the imaging lens 20 and the camera main body 30, as illustrated in Fig.1(A), Fig.1(B), and Fig.1(C). Therefore, even though an offset of the optical axis is caused due to the arrangement of the half mirror 10, such offset can be corrected on the imaging side (the camera main body 30 side). As a result, the good imaging performance can be achieved even when the half mirror 10 is used.

Meanwhile, the focusing-condition-detection subject light is output in the direction that is turned by the half mirror 10 at almost 90 degrees from the optical axis Z1, and is incident on the focusing-condition-detection lens group 11. Then, the focusing-condition-detection subject light is split into three light by the light splitting prism 12. The first focusing-condition-detection subject light is incident on the first focusing-condition-detection imaging element 32A, the second focusing-condition-detection subject light is incident on the second focusing-condition-detection imaging element 32B, and the third focusing-condition-detection subject light is incident on the third focusing-condition-detection imaging element 32C. The focusing-condition-detection imaging elements 32A, 32B, 32C output imaging signals in response to the incident focusing-condition-detection subject light, respectively.

The imaging signals from the focusing-condition-detection imaging elements 32A, 32B, 32C are output to the signal processing section 60. The signal processing section 60 detects the focusing condition of the imaging lens 20 based on the imaging signals obtained from the focusing-condition-detection imaging elements 32A, 32B, 32C, as described later. Then, as described later, the signal processing section 60 outputs a control signal to the focus-lens driving section 40 based on the detected focusing condition to perform the autofocus control of the imaging lens 20.

Meanwhile, as shown in Fig.5, the signal processing section 60 acquires position data of the focus lens from the focus lens position detector 50 into the CPU61 via the A/D converter 62. The CPU61 calculates a moving speed of the focus lens based on the position data of the focus lens, and outputs a control signal for the focus motor to the focus motor driving circuit in the focus-lens driving section 40 via the D/A converter 63.

Also, as shown in Fig.5, the subject images captured by the focusing-condition-detection imaging elements 32A, 32B, 32C are output as the video signals in a predetermined format, respectively. Then, the video signals are converted into a focus estimation value signal indicating a sharpness of the image (contrast of the image) by the high-pass filters 70A, 70B, 70C, the A/D converters 72A, 72B, 72C, the gate circuits 74A, 74B, 74C, and the adders 76A, 76B, 76C. Then, the focus estimation value is input into the CPU 61.

Next, the processes required until the focus estimation value is obtained will be explained hereunder. In this embodiment, because all the focusing-condition-detection imaging elements 32A, 32B, 32C are formed of CCD to capture the monochrome image, the video signals output from the focusing-condition-detection imaging elements 32A, 32B, 32C are a luminance signal indicating luminance of pixels constituting respective screens. Then, the video signals are input into the high-pass filters 70A, 70B, 70C, respectively, to extract high frequency components.

The signals of high frequency components extracted by the high-pass filters 70A, 70B, 70C are converted into digital signals by the A/D converters 72A, 72B, 72C. Out of the digital signals corresponding to one screen (one field) of the image captured by the focusing-condition-detection imaging elements 32A, 32B, 32C, only the digital signals corresponding to the pixels in a predetermined focus area (e.g., a center portion of the screen) are extracted by the gate circuits 74A, 74B, 74C. Then, the values of the digital signals in the extracted range are added by the adders 76A, 76B, 76C. Accordingly, a total sum of the values of the high frequency components of the video signals in the focus area is calculated. The values obtained by the adders 76A, 76B, 76C are the focus estimation value indicating a level of the sharpness of the image in the focus area.

In this case, various synchronization signals are supplied to various circuits such as the focusing-condition-detection imaging elements 32A, 32B, 32C, the gate circuits 74A, 74B, 74C, and the like from the synchronization signal generation circuit 78 shown in Fig.5, and the processes in the respective circuits are synchronized. Also, a vertical synchronization signal (V signal) is supplied to the CPU 61 from the synchronization signal generation circuit 78, for each field of the video signal.

The CPU 61 detects a current focusing condition of the imaging lens 20 on the image plane (focal plane) of the imaging element, based on the focus estimation value obtained from the focusing-condition-detection imaging elements 32A, 32B, 32C as described above.

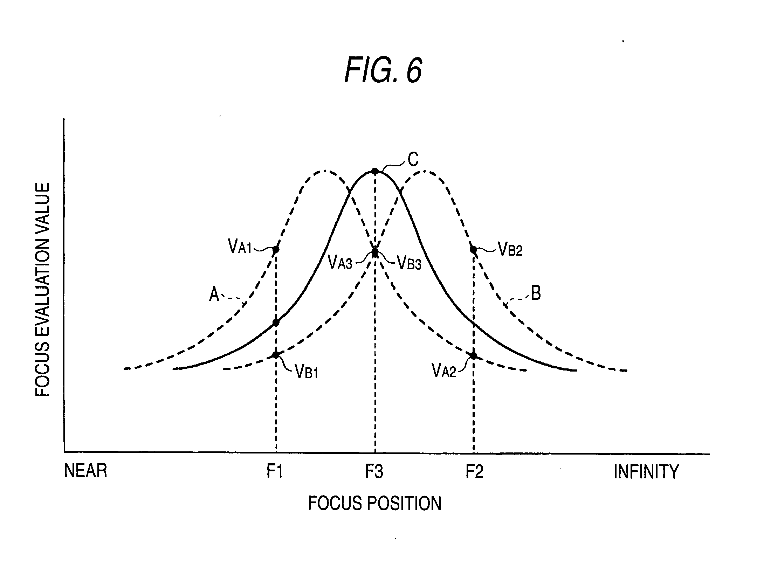

Fig.6 shows behaviors of a focus estimation value with respect to the focus position when a certain subject is captured, wherein an abscissa denotes the focus position of the imaging lens 20 and an ordinate denotes the focus estimation value. In Fig.6, a curve C indicated with a solid line shows the focus estimation value obtained from the third focusing-condition-detection imaging element 32C with respect to the focus position, which corresponds to the focus estimation value obtained from the imaging element 33. Also, in Fig.6, curves A, B indicated with dotted lines show the focus estimation values obtained from the first and second focusing-condition-detection imaging element 32A, 32B, respectively, with respect to the focus position. In Fig.6, a position F3 in which the focus estimation value of the curve C takes a maximum (maximal) value gives the focused position.

When the focus position of the imaging lens 20 is set to F1, the focus estimation value V_{A1} obtained from the first focusing-condition-detection imaging element 32A takes a value corresponding to the position F1 on the curve A, and the focus estimation value V_{B1} obtained from the second focusing-condition-detection imaging element 32B takes a value corresponding to the position F1 on the curve B. At this time, the focus estimation value V_{A1} obtained from the first focusing-condition-detection imaging element 32A becomes larger than the focus estimation value V_{B1} obtained from the second focusing-condition-detection imaging element 32B. From this result, it is appreciated that the focus position is set to the side nearer than the focused position (F3), i.e., is in a front focus condition.

In contrast, when the focus position of the imaging lens 20 is set to F2, the focus estimation value V_{A2} obtained from the first focusing-condition-detection imaging element 32A takes a value corresponding to the position F2 on the curve A, and the focus estimation value V_{B2} obtained from the second focusing-condition-detection imaging element 32B takes a value corresponding to the position F2 on the curve B. At this time, the focus estimation value V_{A2} obtained from the first focusing-condition-detection imaging element 32A becomes smaller than the focus estimation value V_{B2} obtained from the second focusing-condition-detection imaging element 32B. From this result, it is appreciated that the focus position is set to the infinite side rather than the focused position (F3), i.e. , is in a rear focus condition.

To the contrary, when the focus position of the imaging lens 20 is set to F3, i.e., the focused position, it is appreciated that, because the focus estimation value obtained from the third focusing-condition-detection imaging element 32C has a maximum value, the focus position is set to the focused position (F3). Also, the focus estimation value V_{A3} obtained from the first focusing-condition-detection imaging element 32A takes a value corresponding to the position F3 on the curve A, and the focus estimation value V_{B3} obtained from the second focusing-condition-detection imaging element 32B takes a value corresponding to the position F3 on the curve B. At this time, the focus estimation value V_{A3} obtained from the first focusing-condition-detection imaging element 32A becomes equal to the focus estimation value V_{B3} obtained from the second focusing-condition-detection imaging element 32B. From this result, it is also appreciated that the focus position is set to the focused position (F3).

In this manner, it can be detected in which of the front focus, the rear focus, and the focused state the focusing condition in the current focus position of the imaging lens 20 resides, based on the focus estimation values obtained from the focusing-condition-detection imaging elements 32A, 32B, 32C. As can be seen from the above explanation, even if the third focusing-condition-detection imaging element 32C is not provided, the focusing condition can be detected only based on the focus estimation values V_{A}, V_{B} obtained from the first and second focusing-condition-detection imaging element 32A, 32B. That is, the third focusing-condition-detection imaging element 32C can be omitted from the configuration of the focusing condition detection device 100.

As explained above, according to the camera system of this embodiment, at least one of the lens elements of the imaging lens 20 is arranged on the rear side of the half mirror 10, and also at least one of the lens element on the rear side or all constituent elements including the imaging element 33 on the rear side of the half mirror 10 are arranged in the decentering state with respect to the optical axis Z1 of the lens elements on the front side of the half mirror 10. Therefore, even if an offset of the optical axis is caused due to the arrangement of the half mirror 10, such offset can be corrected on the camera main body 30 side. As a result, the good imaging performance can be achieved even when the half mirror 10 is used.

### [Examples]

Next, specific numerical examples of the imaging lens 20 in the camera according to this embodiment will be explained.

### <Example 1>

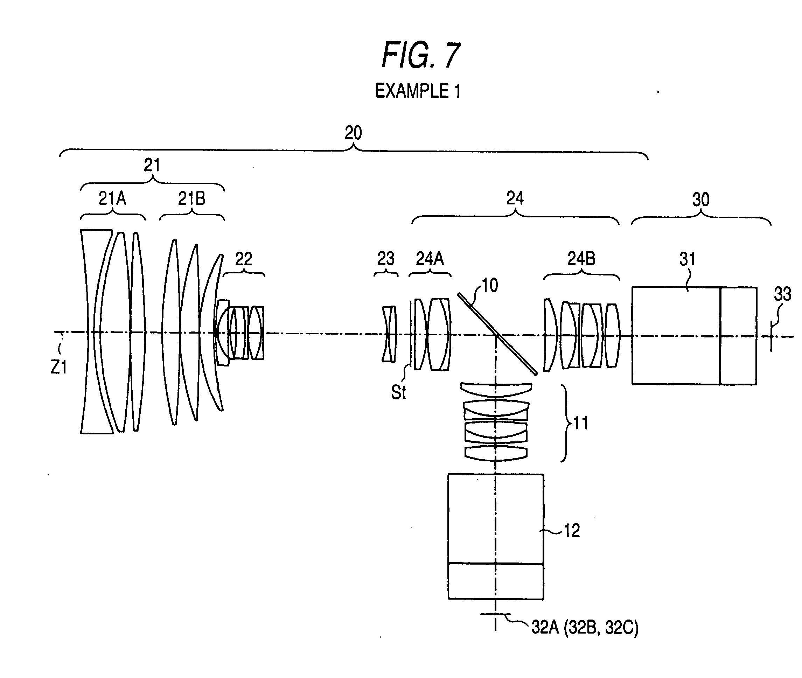

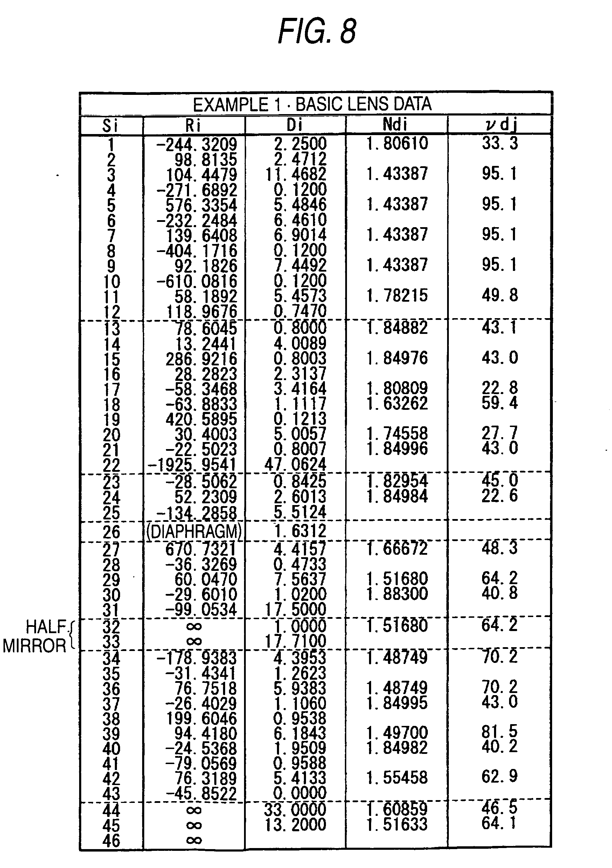

Fig.7 shows a first configurative example (Example 1) of the imaging lens 20. In Fig.7, the same reference symbols are affixed to portions having the same function as the basic configuration shown in Fig.2. Here, the camera-main-body-side optical system 31 is illustrated as prism blocks that are developed equivalently on the optical axis Z1 of the imaging lens 20. Also, the configuration in which the constituent elements on the rear side of the half mirror 10 are not decentered is shown in Fig.7. Specific lens data corresponding to the configuration of the imaging lens 20 shown in Fig.7 are shown in Fig. 8. In the lens data shown in Fig.8, in a column of surface number Si, number of an i-th surface to which a reference is affixed with gradually increasing toward the image side is given when the surface of the constituent element closest to the object side is set as a first surface. In a column of a radius of curvature Ri, a value (mm) of the radius of curvature of the i-th surface from the object side is given. In a column of a surface separation Di, similarly a distance (mm) between an i-th surface Si and an i+1-th surface Si+1 on the optical axis from the object side is given. Also, Ndj gives a value of refractive index of a j-th optical element from the object side with respect to d-line (wavelength 587.6 nm). In a column of vdj, a value of the Abbe constant of a j-th optical element from the object side with respect to d-line is given.

The imaging lens of Example 1 is constructed as a zoom lens whose focal length is varied in a range of 8.12 mm to 119.35 mm. In this zoom lens, because the power varying group 22 and the correcting group 23 move on the optical axis along with the power variation, the values of the surface separations D12, D22, D25 on the front and rear sides of these groups are actually variable. However, only the values at the wide-angle end are given in Fig.8. Also, in the numerical data shown in Fig.8, the half mirror 10 is represented as a flat plate-like member.

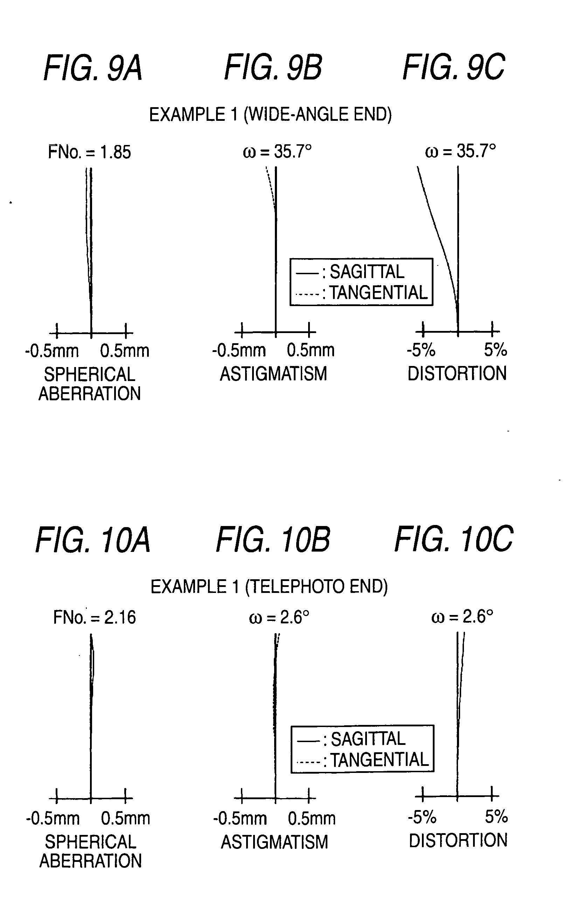

Fig.9(A) to Fig.9(C) show a spherical aberration, an astigmatism, and a distortion of the zoom lens of Example 1 at the wide-angle end, respectively. Fig.10(A) to Fig.10(C) show the spherical aberration, the astigmatism, and the distortion at the telephoto end, respectively. In the respective aberration charts, aberrations obtained by using a wavelength 546.10 nm as a reference wavelength are shown. In the astigmatism charts, a solid line indicates the aberration in the sagittal direction and a broken line indicates the aberration in the tangential direction. FNO. shows the F-number and ω shows a half angle of view. The aberration charts of Fig.9(A) to Fig.9(C) and Fig.10(A) to Fig.10(C) show the aberrations obtained when the inclination angle θ of the half mirror 10 is set to 0° and the constituent elements on the rear side of the half mirror 10 are not decentered.

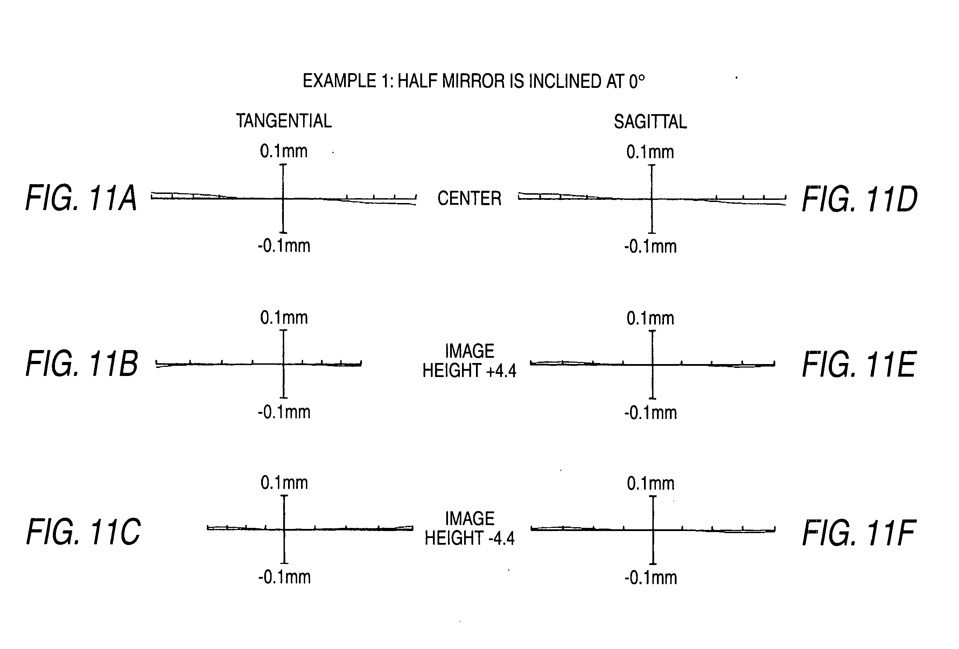

Fig.11(A) to Fig.11(F) show transverse aberrations (comatic aberrations) at respective image heights in the zoom lens of Example 1 when the inclination angle θ of the half mirror 10 is set to 0° and the constituent elements on the rear side of the half mirror 10 are not decentered. In particular, Fig.11(A) to Fig.11(C) show the aberration in the tangential direction, and Fig.11(D) to Fig.11(F) show the aberration in the sagittal direction. In the respective aberration charts, the aberrations obtained by using a wavelength 546.10 nm as a reference wavelength are shown. Also, the image heights show a center position of the optical axis and positions away from the center position of the optical axis by ±4.4 mm.

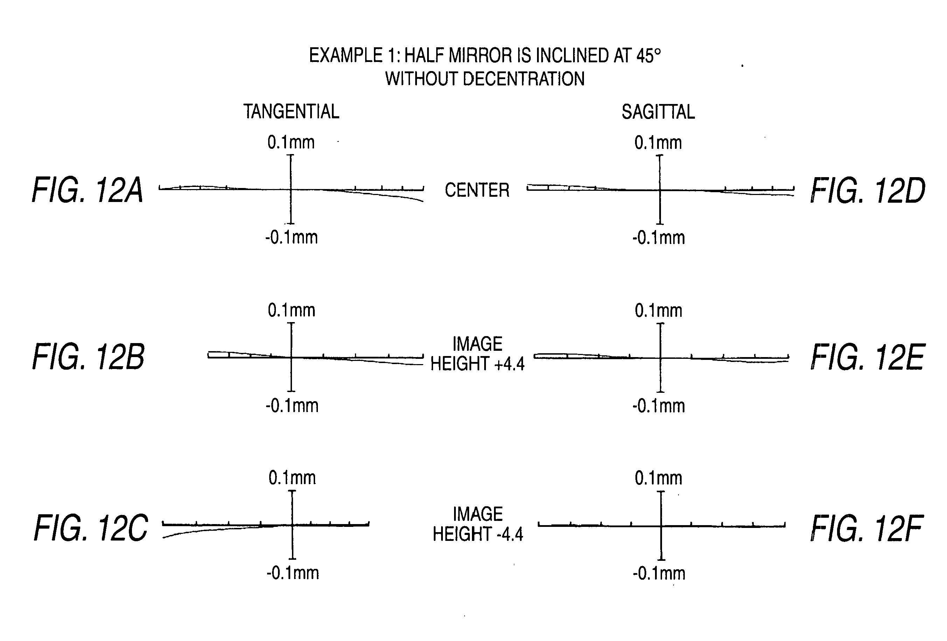

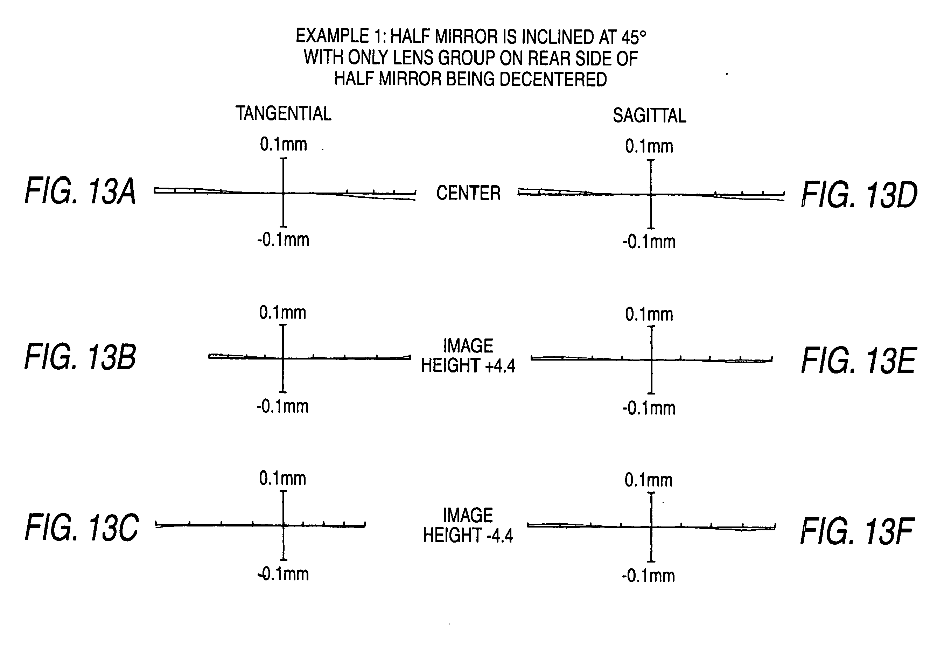

In contrast, the transverse aberrations at the respective image heights obtained when the inclination angle θ of the half mirror 10 is set to 45° and the constituent elements on the rear side of the half mirror 10 are not decentered are shown in Fig. 12 (A) to Fig. 12 (F). Also, the transverse aberrations at the respective image heights obtained when the inclination angle θ of the half mirror 10 is set to 45° and the constituent elements on the rear side of the half mirror 10, specifically only the rear relay optical system 24B, is decentered are shown in Fig. 13 (A) to Fig.13(F).

As can be seen from Fig.12(A) to Fig.12(F), in case the half mirror 10 is inclined, the aberration is generated as the image height increases. To the contrary, as can be seen from Fig.13(A) to Fig.13(F), in the case where the rear relay lens group 24B is decentered, the aberrations at the respective image heights are suppressed.

### <Example 2>

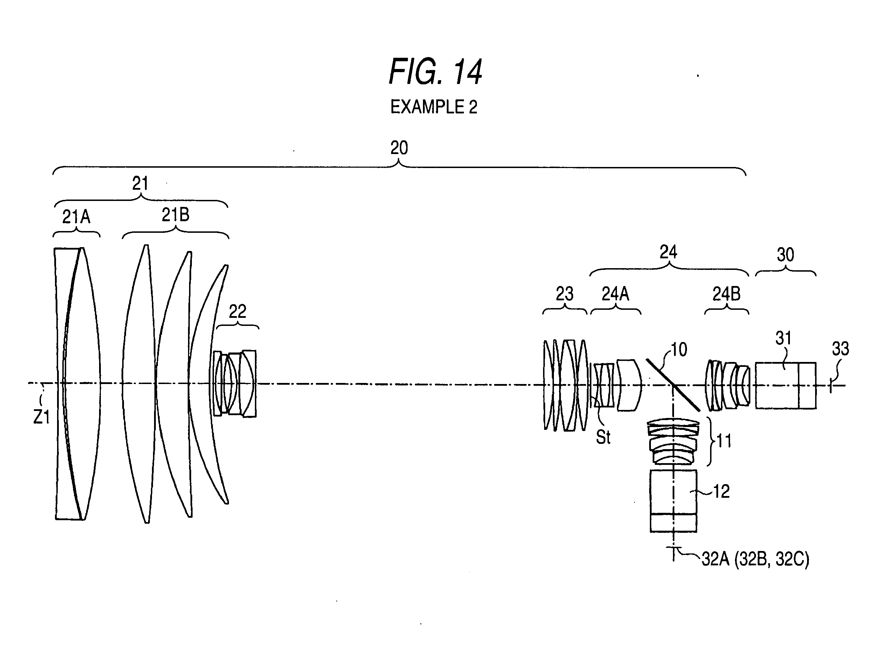

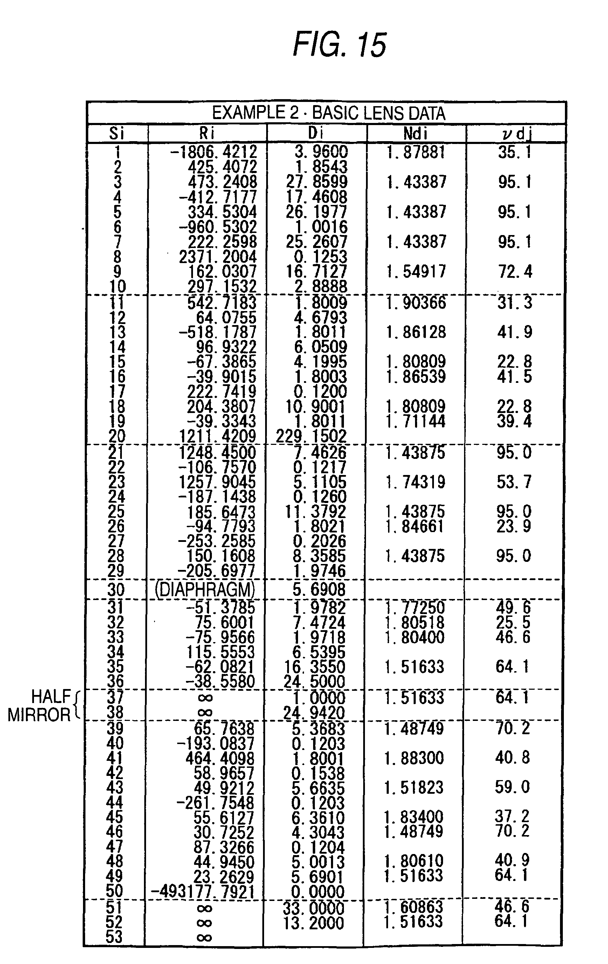

Fig.14 shows a second configurative example (Example 2) of the imaging lens 20. In Fig.14, the same reference symbols are affixed to portions having the same function as the basic configuration shown in Fig.2. Here, the camera-main-body-side optical system 31 is illustrated as prism blocks that are developed equivalently on the optical axis Z1 of the imaging lens 20. Also, the configuration in which the constituent elements on the rear side of the half mirror 10 are not decentered is shown in Fig.14. Specific lens data corresponding to the configuration of the imaging lens 20 shown in Fig.14 are shown in Fig.15. The meanings of the reference symbols in the lens data shown in Fig.15 are similar to those in Example 1 (Fig.8).

The imaging lens of Example 2 is constructed as a zoom lens whose focal length is varied in a range of 9.49 mm to 522.11 mm. In this zoom lens, because the power varying group 22 and the correcting group 23 move on the optical axis along with the power variation, the values of the surface separations D10, D20, D29 on the front and rear sides of these groups are actually variable. However, only the values at the wide-angle end are given in Fig.15. Also, in numerical data in Fig.15, the half mirror 10 is represented as a flat plate-like member.

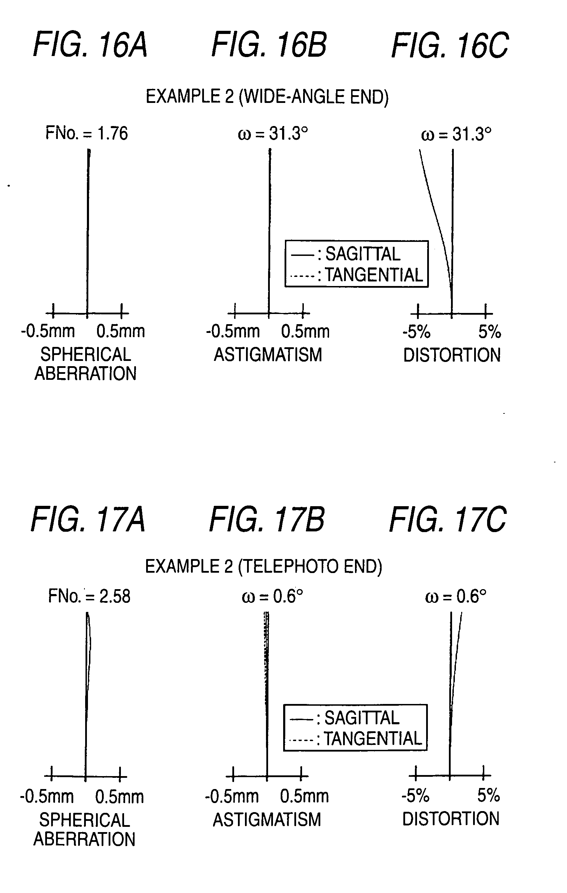

Fig.16(A) to Fig.16(C) show a spherical aberration, a astigmatism and a distortion of the zoom lens of Example 2 at the wide-angle end, respectively. Fig.17(A) to Fig.17(C) show the spherical aberration, the astigmatism, and the distortion at the telephoto end, respectively. In the respective aberration charts, aberrations obtained by using a wavelength 546.10 nm as a reference wavelength are shown. In the astigmatism charts, a solid line indicates the aberration in the sagittal direction and a broken line indicates the aberration in the tangential direction. FNO. shows the F-number and ω shows a half angle of view. The aberration charts of Fig.16(A) to Fig.16(C) and Fig.17(A) to Fig.17(C) show the aberrations obtained when the inclination angle θ of the half mirror 10 is set to 0 ° and the constituent elements on the rear side of the half mirror 10 are not decentered.

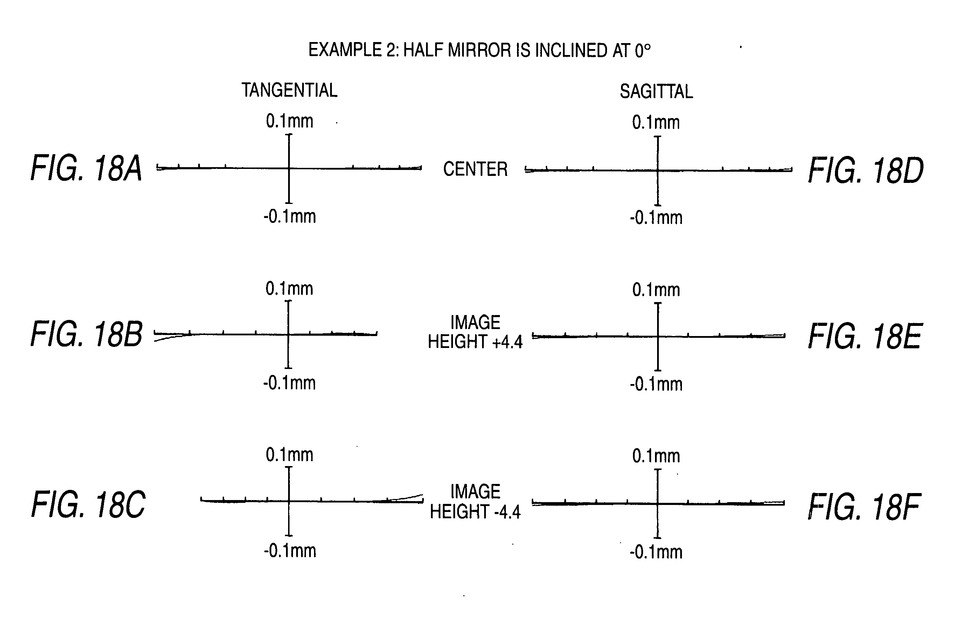

Fig.18(A) to Fig.18(F) show the transverse aberrations (comatic aberrations) at respective image heights in the zoom lens of Example 2 when the inclination angle θ of the half mirror 10 is set to 0 ° and the constituent elements on the rear side of the half mirror 10 are not decentered. In particular, Fig.18(A) to Fig.18(C) show the aberration in the tangential direction, and Fig.18(D) to Fig.18(F) show the aberration in the sagittal direction. In the respective aberration charts, aberrations obtained by using a wavelength 546.10 nm as a reference wavelength are shown. Also, the image heights show a center position of the optical axis and positions away from the center position of the optical axis by ±4.4 mm.

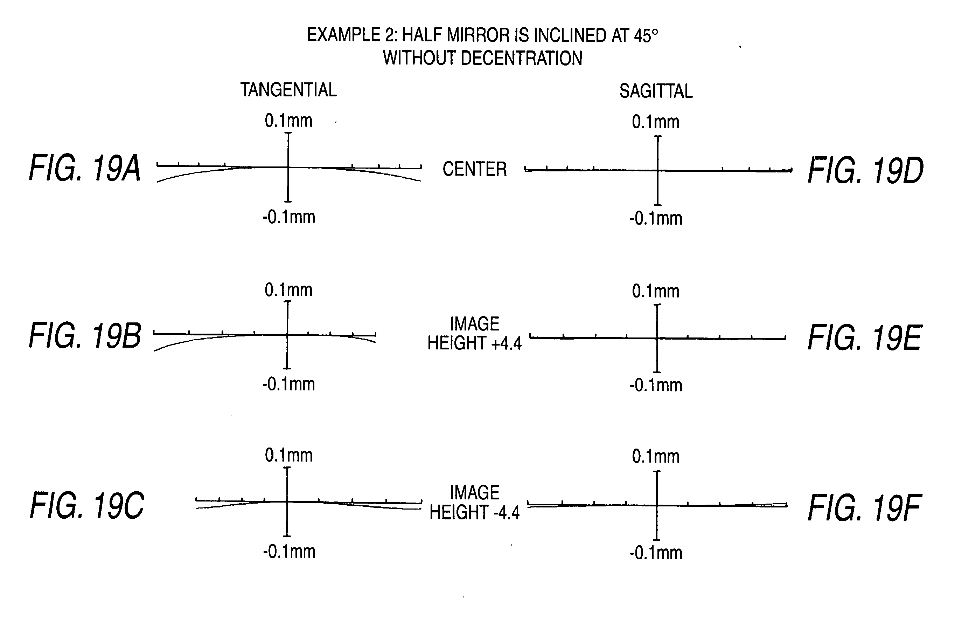

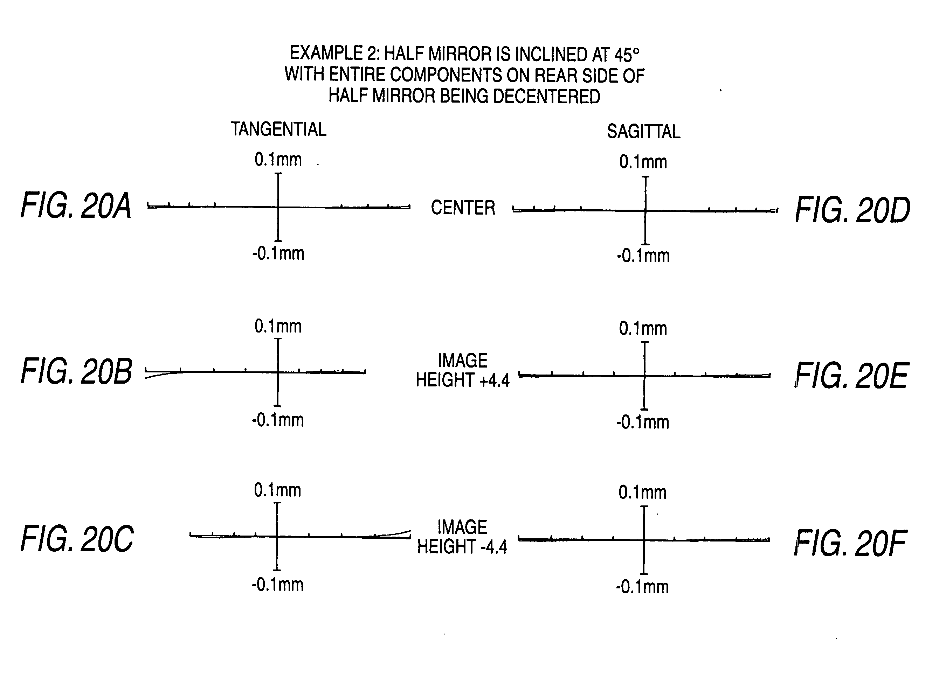

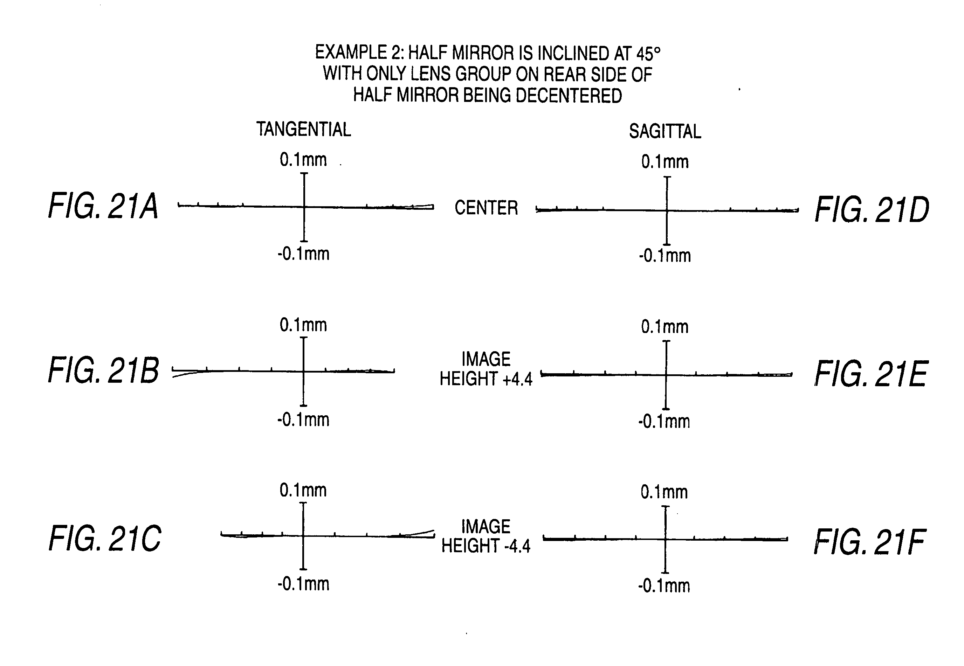

In contrast, the transverse aberrations at the respective image heights obtained when the inclination angle θ of the half mirror 10 is set to 45 ° and the constituent elements on the rear side of the half mirror 10 are not decentered are shown in Fig.19(A) to Fig.19(F). In addition, the transverse aberrations at the respective image heights obtained when the inclination angle θ of the half mirror 10 is set to 45° and all constituent elements on the rear side of the half mirror 10, specifically the rear relay optical system 24B and the camera-main-body-side optical system 31, are decentered are shown in Fig.20(A) to Fig.20(F). Also, the transverse aberrations at the respective image heights obtained when the inclination angle θ of the half mirror 10 is set to 45° and the constituent elements on the rear side of the half mirror 10, specifically only the rear relay optical system 24B, are decentered are shown in Fig.21(A) to Fig.21(F).

As can be seen from Fig.19(A) to Fig.19(F), in the case where the half mirror 10 is inclined, the aberration is generated as the image height increases. To the contrary, as can be seen from Fig.20(A) to Fig.20(F), in the case where all the constituent elements on the rear side of the half mirror 10 are decentered, the aberrations at the respective image heights are suppressed. Similarly, as can be seen from Fig.21(A) to Fig.21(F), in the case where only the rear relay lens group 24B is decentered, the aberrations at the respective image heights are suppressed.

It is noted that the invention is not limited to the above embodiment and the respective examples. Various modifications can be made. For example, the values of the radius of curvature, the surface separation, and the refractive index of respective lens components, and the like are not limited to the foregoing values in the numerical examples, and other values may be employed.

## Claims

1. A camera having a focusing condition detection function, the camera comprising:
an imaging lens including a plurality of lenses; a half mirror arranged on an optical path of the imaging lens to split subject light passing through the imaging lens into transmitted light and reflected light, the transmitted light being set as imaging subject light, the reflected light being set as focusing-condition-detection subject light;
a camera main body including an imaging element on which the imaging subject light is incident; and
a focusing condition detection device including a focusing-condition-detection imaging element on which the focusing-condition-detection subject light is incident, the focusing condition detection device that detects a focusing condition of the imaging lens based on an image captured by the focusing-condition-detection imaging element, wherein:
at least one lens element of the imaging lens is arranged on a rear side of the half mirror, and
at least one of the lens element on the rear side or all constituent elements including the imaging element on the rear side of the half mirror are arranged in a decentering state with respect to an optical axis of lens elements on a front side of the half mirror.

2. The camera having the focusing condition detection function, according to claim 1, wherein the at least one of the lens element on the rear side or all the constituent elements on the rear side of the half mirror are arranged so as to be decentered in a direction corresponding to an offset of the optical axis caused by the half mirror.

3. The camera having the focusing condition detection function, according to any one of claims 1 to 2, wherein:
the camera main body comprises
a camera-main-body-side optical system including a color separation optical system that separates the imaging subject light into a plurality of color lights,
and
a plurality of imaging elements on which the plurality of color lights into which the imaging subject light is separated are incident, respectively, and
the at least one lens element on the rear side of the imaging lens, the camera-main-body-side optical system, and all the constituent elements including the plurality of imaging elements on the rear side of the half mirror are arranged in a decentering state.

4. The camera having the focusing condition detection function, according to any one of claims 1 to 3, wherein:
the imaging lens comprises a relay optical system including a plurality of lenses, and
the half mirror is arranged in the relay optical system.

5. The camera having the focusing condition detection function; according to any one of claims 1 to 4, wherein the focusing condition detection device has a function of performing autofocus control of the imaging lens based on the detected focusing condition.
